# EUROPÄISCHE PATENTSCHRIFT

(11) **EP 1 941 194 B1**
(45) Veröffentlichungstag und Bekanntmachung des Hinweises auf die Patenterteilung: **02.01.2013**
(21) Anmeldenummer: 06828848.9
(22) Anmeldetag: 21.10.2006
(51) Int. Cl.: F16K 1/44

(54) **ROHRVERZWEIGUNGSANORDNUNG**
PIPE BRANCHING ARRANGEMENT
DISPOSITIF DE RAMIFICATION DE TUBE

(30) Priorität: 24.10.2005 DE 102005051467
(43) Veröffentlichungstag der Anmeldung: 09.07.2008
(73) Patentinhaber: SUEDMO HOLDING GMBH, 73469 Riesbuerg (DE)
(72) Erfinder: THOMASCHKI, Stephan, 73469 Riesbuerg (DE)
(74) Vertreter: Heuckeroth, Volker
(86) Internationale Anmeldenummer: PCT/EP2006/010170
(87) Internationale Veröffentlichungsnummer: WO 2007/048549

(56) Entgegenhaltungen:
- EP-A2- 0 987 476
- WO-A-98/54493
- WO-A-02/066593

## Beschreibung

Die Erfindung betrifft eine Rohrverzweigungsanordnung, insbesondere für ein Tanklagersystem, mit einem sich zumindest annähernd vertikal erstreckenden Hohlkörper, der zumindest einen seitlichen Anschluss aufweist, mit zumindest einem vermischungssicheren Ventil, das an dem Anschluss sitzt und eine absperrbare Verbindung des Hohlkörpers zu zumindest einer Rohrleitung herstellt, wobei das Ventil zwei Schließglieder aufweist, zwischen denen ein Leckageraum vorhanden ist, der eine Leckageaustrittsöffnung aufweist, wobei der Leckageraum eine sich von einem anschlussseitigen Eintritt bis zur vom Eintritt beabstandeten austrittseitigen Leckageaustrittsöffnung erstreckende Umfangswand aufweist.

Eine derartige Rohrverzweigungsanordnung ist aus dem Dokument WO-A-02/066593 bekannt, dass die Merkmale des Obergegriffs des Anspruchs 1 zeigt.

Eine Rohrverzweigungsanordnung der eingangs genannten Art wird insbesondere zum Betrieb von Tanklagersystemen im fest verrohrten Verbund mit Rohrsystemen für Flüssigkeiten, insbesondere zur Anwendung in hohen mikrobiologischen Qualitätsanforderungen unterliegenden Anlagen zur Produktbearbeitung und zum Produkttransfer in der Nahrungsmittel- und Getränkeindustrie, der Pharmazie und der. Biotechnologie verwendet.

In dem oben genannten Dokument WO-A-02/066593 ist eine Anordnung von Tanks beschrieben, wobei im unteren Tankboden des jeweiligen Tanks ein Hohlkörper als Ventilverteilerbaum angeordnet ist, wobei der langgestreckte Hohlkörper vertikal ausgerichtet ist. Der Hohlkörper weist eine Mehrzahl von Anschlüssen zum Verbinden des Innenraums des Hohlkörpers mit jeweils einer Rohrleitung auf. Mit dem jeweiligen Anschluss des Hohlkörpers ist ein vermischungssicheres Ventil verbunden, das eine Verbindung der jeweiligen Rohrleitung mit dem Hohlkörper in unmittelbarer Nähe zum Hohlkörper zur absperrbaren Verbindung des Hohlkörpers mit der jeweiligen Rohrleitung herstellt.

Die Zufuhr und die Abfuhr von Flüssigkeiten in und aus den Tanks erfolgt durch den zuvor beschriebenen Hohlkörper von unten. Die Flüssigkeit wird über den Hohlkörper, der dabei vorzugsweise direkt mit dem jeweiligen Tank verbunden ist, durch die vermischungssicheren Ventile in die jeweilige Rohrleitung weitergeleitet oder abgesperrt.

Bei der bekannten Rohrverzweigungsanordnung sind die jeweiligen vermischungssicheren Ventile streng horizontal bzw. rechtwinklig zum Hohlkörper ausgerichtet.

Diese Anordnung der Ventile kann jedoch zur Folge haben, dass Leckage, die sich im Leckageraum zwischen den beiden Schließgliedern des Ventils sammelt, nicht selbständig abfließen kann. Um die Leckageflüssigkeit abzuleiten, ist in diesem Fall ein zusätzliches Leckageventil notwendig, das den Leckageraum zur Atmosphäre hin öffnet.

Die Notwendigkeit eines zusätzlichen Leckageventils für ein Abfließen von Leckageflüssigkeit aus dem Leckageraum hat jedoch den Nachteil, dass eine zusätzliche Ansteuerung dieses zusätzlichen Leckageventils notwendig ist, einschließlich Verschlauchung, Steuerung usw., was die Gestehungskosten des Ventils nachteiligerweise erhöht.

Des Weiteren birgt ein zusätzliches Leckageventil in einer solchen Anordnung die Gefahr von Verkeimungen/Verunreinigungen, mit der Folge, dass das zusätzliche Leckageventil zusätzlich gereinigt werden muss, und auch eine zusätzliche Wartung über die notwendige Wartung des vermischungssicheren Ventils hinaus erfordert.

Andererseits muss gewährleistet sein, dass sich im Leckageraum ansammelnde Leckageflüssigkeit aus dem Ventil entfernt wird, da ansonsten die sich sammelnde Leckageflüssigkeit verkeimen kann und die heutzutage sehr hohen Anforderungen an die mikrobiologische Reinheit derartiger Produktionsanlagen nicht erfüllt werden können.

Aus EP 0 987 476 A2 ist ein Ventil, insbesondere Doppelsitzventil, bekannt, das in einem Gehäuse zwei in Reihe zueinander angeordnete, relativ zueinander und zum Ventilgehäuse axial bewegbare Ventilkörper aufweist, die zwischen sich einen zur Umgebung des Ventils geöffneten Leckagehohlraum begrenzen. Das Ventil wird bevorzug senkrecht stehend in Kreuzungsbereichen von Leitungen eines Leitungsnetzwerkes mit übereinanderliegenden Leitungen eingebaut.

Der Erfindung liegt die Aufgabe zugrunde, eine Rohrverzweigungsanordnung der eingangs genannten Art dahingehend weiterzubilden, dass die hohen Anforderungen an die mikrobiologische Reinheit ohne wesentlichen konstruktiven Mehraufwand erfüllt werden können.

Erfindungsgemäß wird diese Aufgabe hinsichtlich der eingangs genannten Rohrverzweigungsanordnung dadurch gelöst, dass die Umfangswand schwerkraftseitig zur Leckageaustrittsöffnung ein Gefälle aufweist, und dass das Ventil eine Längsachse aufweist, die mit der Horizontalen einen Winkel von ≠ 0° bildet und unterhalb der Horizontalen liegt, um das Gefälle zu erzeugen, wobei der Winkel in einem Bereich zwischen etwa 1° und etwa 45° liegt.

Bei der erfindungsgemäßen Rohrverzweigungsanordnung ist das Ventil über den Anschluss derart mit dem Hohlkörper verbunden, dass eine in den Leckageraum eintretende Leckageflüssigkeit selbständig zur Leckageaustrittsöffnung abfließt, weil der Leckageraum ein sich vom anschlussseitigen Eintritt bis zur austrittseitigen Leckageaustrittsöffnung erstreckendes Gefälle aufweist. Da sich auf diese Weise im Leckageraum keine Leckageflüssigkeit ansammeln kann, erfüllt die erfindungsgemäße Rohrverzweigungsanordnung die hohen Anforderungen an die mikrobiologische Reinheit. Die Erfüllung der mikrobiologischen Reinheit wird des Weiteren ohne wesentlichen konstruktiven Mehraufwand erreicht, da aufgrund des Gefälles des Leckageraums kein zusätzliches Leckageabflussventil vorgesehen werden muss.

Das Ventil weist eine Längsachse auf, die mit der Horizontalen einen Winkel von ≠ 0° bildet und unterhalb der Horizontalen liegt, um das Gefälle zu erzeugen.

Diese Maßnahme stellt eine konstruktiv sehr einfache Möglichkeit dar, den Leckageraum mit einem Gefälle zu versehen, indem nämlich das Ventil als solches nicht wie im Stand der Technik streng horizontal mit dem vertikalen Hohlkörper verbunden wird, sondern in einer schräg abfallenden Anordnung. Die winkelmäßige Abweichung der Anordnung des Ventils in Bezug auf die Horizontale wird zweckmäßigerweise so gewählt werden, dass die Schrägstellung gerade ausreicht, im Leckageraum ein Gefälle zu erzeugen. Dies wird auch von dem Verlauf der Umfangswand des Leckageraums auf dessen Schwerkraftseite (untere Seite) abhängen.

Eine übermäßige Schrägstellung des Ventils geht nämlich zu Lasten eines erhöhten Bauraums in vertikaler Richtung des Hohlkörpers, wenn die Rohrverzweigungsanordnung an dem Hohlkörper in vertikaler Richtung eine Mehrzahl von Rohrverzweigungen mit jeweiligem Ventil aufweist.

Der Winkel der Schrägstellung des Ventils in Bezug auf die Horizontale liegt in einem Bereich zwischen etwa 1° und etwa 45°, vorzugsweise in einem Bereich zwischen etwa 10° und etwa 30°.

In einer weiteren bevorzugten Ausgestaltung weist der Leckageraum zumindest einen Abschnitt auf, der sich von der Eintrittsseite her in Richtung zur Leckageaustrittsöffnung verjüngt, und weist die Umfangswand des Leckageraums in diesem Abschnitt schwerkraftseitig ein Gefälle in einem Bereich von zumindest 0,5° auf.

Wenn das Ventil eine sich verjüngende, insbesondere konisch verjüngende Umfangswand aufweist, wie dies in einer nachfolgend noch zu beschreibenden bevorzugten Ausgestaltung in Verbindung mit einem sich konisch verjüngenden Schließglied der Fall ist, würde eine streng horizontale Anordnung des Ventils einen selbständigen Abfluss der Leckageflüssigkeit verhindern. Die Leckageflüssigkeit würde in einem solchen Fall sogar in den Hohlkörper zurückfließen. Die zuvor genannte bevorzugte Ausgestaltung sieht demgegenüber vor, dass der sich zur Leckageaustrittsöffnung hin verjüngende Abschnitt des Leckageraums ein Gefälle von zumindest etwa 0,5° in der Einbaulage des Ventils besitzt, so dass ein Abfließen der Leckageflüssigkeit zur Leckageaustrittsöffnung hin gewährleistet ist. Bei einem um die Längsachse des Ventils rotationssymmetrischen Ventil bedingt dies, das Ventil schräg nach außen vom Hohlkörper weg abfallend mit diesem zu verbinden.

In weiteren bevorzugten Ausgestaltungen weist der sich zur Leckageaustrittsöffnung verjüngende Abschnitt schwerkraftseitig ein Gefälle in einem Bereich von etwa 0,5° und etwa 10°, vorzugsweise zwischen etwa 1° und etwa 5°, weiter vorzugsweise etwa zwischen 2° und etwa 3° auf.

In einer weiteren bevorzugten Ausgestaltung ist das eine der Schließglieder ein mit einem zylindrischen ersten Ventilsitz an einem Ventilgehäuse zusammenwirkender Ventilteller, der eine Radialdichtung aufweist, und das andere Schließglied ist in Form einer konischen Schließhülse ausgebildet, die an ihrem dem Ventilteller zugewandten Ende eine schräg axiale Dichtung trägt, die mit einem konischen zweiten Ventilsitz am Ventilgehäuse zusammenwirkt.

Diese Ausgestaltung der beiden Schließglieder des Ventils hat den Vorteil einer konstruktiv einfachen und kleinbauenden Bauweise, weil die konische Schließhülse innenseitig die Umfangswand (zumindest schwerkraftseitig) des Leckageraums bildet, und außerdem an ihrem dem Ventilteller zugewandten Ende mittels der dort vorgesehenen Axialdichtung gleichzeitig die ventilseitige Abdichtung gewährleistet.

Dabei ist es weiterhin bevorzugt, wenn der Ventilteller relativ zur Schließhülse in Längsrichtung des Ventils axial beweglich ist und eine zweite schräg axial wirkende Dichtung aufweist, die zum eintrittsseitigen Absperren des Leckageraums mit einer Innenseite der Schließhülse dichtend in Anlage kommt.

Dadurch, dass der Ventilteller eine zweite schräg axial wirkende Dichtung aufweist, die zum eintrittsseitigen Absperren des Leckageraums mit einer Innenseite der Schließhülse dichtend in Anlage kommt, wird vorteilhafterweise keine zusätzliche Dichtkante im Bereich dieser Dichtungsanlage notwendig. Eine solche Dichtungskante in diesem Bereich würde das Ablaufen der Leckageflüssigkeit behindern und außerdem eine Keimbildung begünstigende Ecken und Nischen bilden.

In einer weiteren bevorzugten Ausgestaltung weist der Anschluss an dem Hohlkörper ein Anschlussgehäuse auf, das in Längsrichtung des Hohlkörpers gesehen einen oberen, seitlich vom Hohlkörper abstehenden und nach unten gerichteten Abschnitt zur schräg abfallenden Verbindung des Ventils mit dem Hohlkörper aufweist.

Diese Ausgestaltung des Anschlussgehäuses des Anschlusses, über den das Ventil mit dem Hohlkörper verbunden ist, ermöglicht eine montagefreundliche schräge Anordnung des Ventils in Bezug auf den Hohlkörper, wobei das Anschlussgehäuse auf diese Weise einer Reinigung ebenfalls leicht zugänglich ist.

Weitere Merkmale und Vorteile ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine Rohrverzweigungsanordnung mit einem Hohlkörper und insgesamt sechs Ventilen, teilweise im Längsschnitt; und
- Fig. 2: eine gegenüber Fig. 1 vergrößerte Darstellung eines Ausschnitts der Rohrverzweigungsanordnung in Fig. 1, teilweise im Längsschnitt.

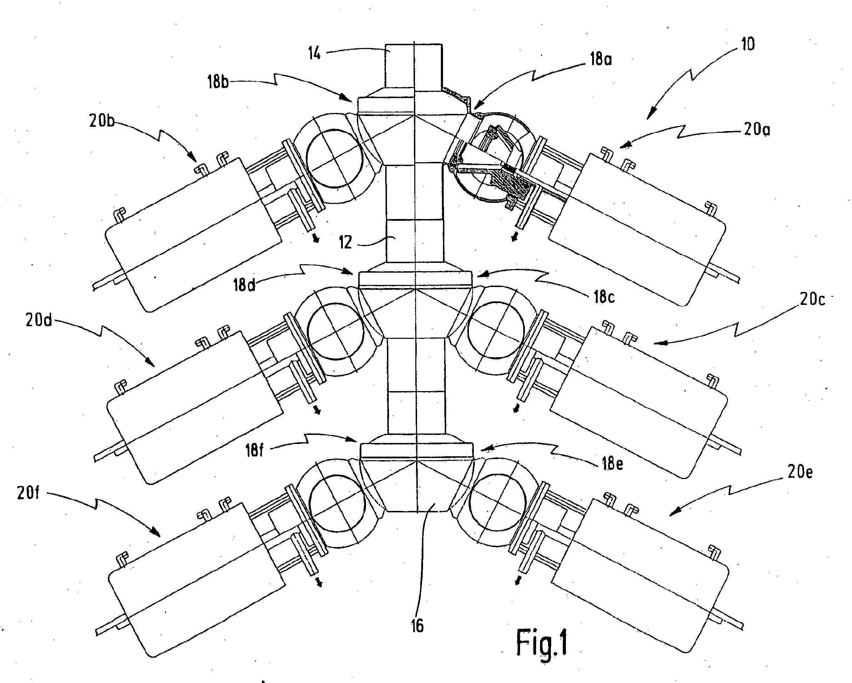

In Fig. 1 ist eine mit dem allgemeinen Bezugszeichen 10 versehene Rohrverzweigungsanordnung dargestellt. Die Rohrverzweigungsanordnung 10 wird in einer Tanklageranlage verwendet, wie sie beispielsweise in dem Dokument WO-A-02/066593 dargestellt und beschrieben ist. Die Rohrverzweigungsanordnung 10 ersetzt bei einer solchen Verwendung den dort vorgesehenen Ventilverteilerbaum.

Die Rohrverzweigungsanordnung 10 weist einen langerstreckten vertikal angeordneten Hohlkörper 12 auf. Ein oberes Ende 14 des Hohlkörpers 12 ist dabei unmittelbar oder über ein weiteres Ventil mit einem darüber angeordneten Tank an dessen Tankboden verbunden. Der Tank nebst Tankboden ist in der Zeichnung nicht dargestellt.

Ein unteres Ende 16 des Hohlkörpers 12 ist in dem gezeigten Ausführungsbeispiel verschlossen, kann jedoch auch eine weitere Rohrverzweigung mit Ventil aufweisen.

An dem Hohlkörper 12 sind in dem gezeigten Ausführungsbeispiel insgesamt sechs Anschlüsse 18a bis 18f ausgebildet, wobei an jedem Anschluss 18a bis 18f ein Ventil 20a bis 20f angeschlossen ist.

Die Anschlüsse 18a bis 18f sind seitlich am Hohlkörper 12 angeordnet.

Die in dem vorliegenden Ausführungsbeispiel gezeigte Anzahl von sechs Anschlüssen 18a bis 18f und entsprechend sechs Ventilen 20a bis 20f ist lediglich beispielhaft und kann je nach Anforderung und Verwendung der Rohrverzweigungsanordnung 10 auch anders gewählt sein.

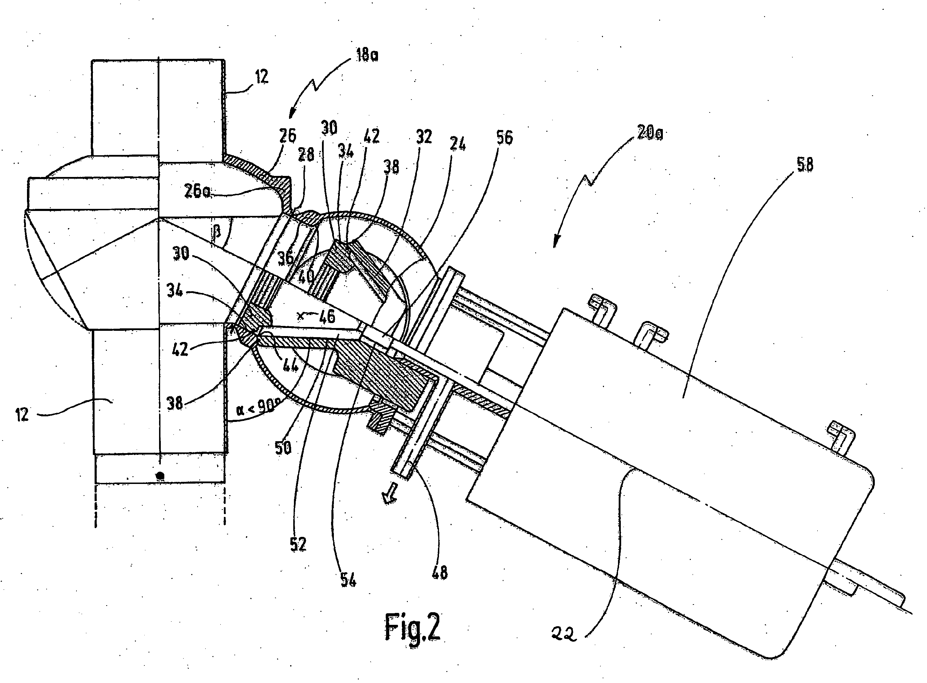

In Fig. 2 ist ein Ausschnitt der Rohrverzweigungsanordnung 10 in Fig. 1 im Bereich des Anschlusses 18a und des Ventils 20a in gegenüber Fig. 1 vergrößertem Maßstab dargestellt.

Der Hohlkörper 12, der Anschluss 18a und das Ventil 20a sind teilweise in einem Längsschnitt gezeigt. Das Ventil 20a ist des Weiteren in zwei Teilbildern gezeigt, die durch eine Längsachse 22 des Ventils 18a getrennt sind, wobei die beiden Teilbilder jeweils einen unterschiedlichen Betriebszustand des Ventils 20a zeigen.

Das Ventil 20a ist ein vermischungssicheres Ventil, insbesondere ein Doppelsitzventil, wie hiernach noch näher beschrieben wird.

Das Ventil 20a weist ein Ventilgehäuse 24 auf, über das das Ventil 20a mit einem Anschlussgehäuse 26 des Anschlusses 18a an einer Anschlussstelle 28 verbunden ist. Das Anschlussgehäuse 26 ist einstückig mit dem Hohlkörper 12 verbunden.

Wie aus Fig. 2 hervorgeht, weist das Anschlussgehäuse 26 in Längsrichtung des Hohlkörpers 12 gesehen einen oberen, seitlich vom Hohlkörper 12 abstehenden und nach unten gerichteten Abschnitt 26a auf, der eine schräg nach unten abfallende Verbindung des Ventils 20a mit dem Hohlkörper 12 ermöglicht, wie hiernach noch näher beschrieben wird.

Das Ventil 20a stellt eine Verbindung des Hohlkörpers 12 zu einer nicht dargestellten Rohrleitung her, die in Fig. 2 beispielsweise senkrecht zur Zeichenebene verläuft.

In dem Ventilgehäuse 24 sind zwei relativ zueinander bewegliche Schließglieder 30 und 32 angeordnet.

Das Schließglied 30 ist in Form eines Ventiltellers ausgebildet, der eine erste radial wirkende Dichtung 34 aufweist, die in dem unteren Teilbild in Fig. 2, das die Schließstellung des Schließgliedes 30 zeigt, mit einem zylindrischen Ventilsitz 36 radial dichtend zusammenwirkt.

Das zweite Schließglied 32 ist in Form einer sich vom Hohlkörper 12 aus gesehen konisch verjüngenden Schließhülse ausgebildet. Die Schließhülse 32 weist an ihrem dem Ventilteller 30 zugewandten Ende eine schräg axial wirkende Dichtung 38 auf, die mit einem konischen Ventilsitz 40 in der Schließstellung der Schließhülse 32 dichtend zusammenwirkt. Die Schließstellung der Schließhülse 32 ist in dem unteren Teilbild der Fig. 2 dargestellt.

In der Schließstellung des Ventiltellers 30 und der Schließhülse 32 sind der Ventilteller 30 und die Schließhülse 32 voneinander beabstandet.

Am Ventilteller 30 ist neben der radial wirkenden Dichtung 34 noch eine schräg axial wirkende Dichtung 42 vorhanden, die mit einer Innenseite der Schließhülse 32 an der mit dem Bezugszeichen 44 versehenen Stelle dichtend in Anlage kommt, wenn der Ventilteller 30 gegen die Schließhülse 32 in Richtung von dem Anschluss 18a weg zurückgezogen wird.

Zwischen den Schließgliedern 30 (Ventilteller) und 32 (Schließhülse) ist ein Leckageraum 46 vorhanden, der sich etwa vom anschlussseitigen Ende der Schließhülse 32 bis zu einer Leckageaustrittsöffnung 48 erstreckt.

Der Leckageraum 46 ist durch eine Umfangswand 50 begrenzt, die in einem ersten Abschnitt 52 durch die sich konisch verjüngende Innenwand der Schließhülse 32 gebildet wird, und in einem zweiten Abschnitt 54 durch eine zylindrische Innenwand der Schließhülse 32, wobei der Abschnitt 54 schließlich in die Leckageaustrittsöffnung 48 mündet.

Die Einbaulage des Ventils 20a und die Ausgestaltung der Umfangswand 50 des gesamten Leckageraums 46 ist nun so getroffen, dass die Umfangswand 50 schwerkraftseitig vom anschlussseitigen Eintritt in den Leckageraum 46 bis zur austrittseitigen Leckageaustrittsöffnung 48 bezogen auf die Horizontale in Richtung zur Leckageaustrittsöffnung 48 hin ein Gefälle aufweist.

Im Abschnitt 52 des Leckageraums beträgt das Gefälle in dem gezeigten Ausführungsbeispiel etwa 2,5°, d.h. der in Fig. 2 angegebene Winkel α, der das Gefälle in Bezug auf die Vertikale angibt, beträgt etwa 87,5°.

Im Abschnitt 54 des Leckageraums 46 ist das Gefälle größer als etwa 2,5°.

Um das durchgehende Gefälle des Leckageraums 46 zu ermöglichen, ist das Ventil 20a schräg abfallend mit dem Hohlkörper 12 verbunden, wozu das Anschlussgehäuse 26 mit der in Fig. 2 dargestellten Formgebung ausgebildet ist. Die Längachse 22 des Ventils 20a bildet mit der Horizontalen einen Winkel β von etwa 28°.

Allgemein gilt, dass der Neigungswinkel β des Ventils 20a so gewählt ist, dass die Leckageflüssigkeit aus dem Leckageraum 46 selbständig abläuft und aufgrund der konischen Ausgestaltung der Schließhülse 32 ein Lager 56, das der Führung des Ventiltellers 30 dient, eine einwandfreie Führung des Ventiltellers 30 gewährleistet.

Würde das Ventil 20a weniger steil abfallend angeordnet, so müsste das Lager 56 noch weiter vom Anschluss 18a weg nach hinten verlegt werden, um im Leckageraum 46 das zum Abfließen der Leckageflüssigkeit notwendige Gefälle zu erreichen. Dies hätte jedoch zur Folge, dass der Ventilteller 30 aufgrund seiner großen Auslage nicht gut geführt werden könnte.

Umgekehrt hätte ein stärkeres Abfallen des Ventils 20a gegenüber der Horizontalen zur Folge, dass das Anschlussgehäuse 26 des Anschlusses 18a übermäßig vergrößert werden müsste und somit eine wirtschaftliche Herstellbarkeit der Rohrverzweigungsanordnung 10 verschlechtert wäre.

Das Ventil 20a weist ferner an seinem hinteren Ende einen Steuerantrieb 58 auf, der der Steuerung der Schließglieder 30 und 32 dient und in an sich bekannter Ausführung ausgestaltet sein kann.

Der halbe Öffnungswinkel des konusförmigen Abschnitts der Schließhülse 32 beträgt in dem gezeigten Ausführungsbeispiel etwa 25°, kann jedoch auch in einem Bereich von 15 bis 35° gewählt sein, wobei stets zu berücksichtigen ist, dass die Innenwand der Schließhülse schwerkraftseitig noch ein Gefälle besitzt.

Nachfolgend wird die Funktionsweise des Ventils 20a näher beschrieben.

In dem unteren Teilbild in Fig. 2 ist das Ventil 20a in seiner Schließstellung gezeigt, in der der Ventilteller 30 und die Schließhülse 32 ihre bereits oben beschriebene Schließstellung einnehmen.

Um das Ventil 20a zu öffnen, wird über den Steuerantrieb 58 der Ventilteller 30 in Richtung zur Schließhülse 32 hin zurückgezogen, ohne dass sich dabei die Schließhülse 32 zunächst selbst bewegt. Bei diesem Vorgang wird die radial dichtende Dichtung 34 über den zylindrischen Ventilsitz 36 gezogen und dichtet das Medium im Hohlkörper 12 weiterhin hohlkörperseitig ab.

Dann kommt die Dichtung 42 mit der vollumfänglichen Stelle 44 an der Innenseite der konusförmigen Schließhülse 32 dichtend in Anlage und dichtet den Leckageraum 46 ab. Die Schließhülse 32 hat sich dabei noch nicht von ihrem Ventilsitz 40 weg bewegt. Zu diesem Zeitpunkt steht die Dichtung 34 des Ventiltellers 30 hohlkörperseitig, die Dichtung 42 des Ventiltellers 30 leckageraumseitig, und die Dichtung 38 der Schließhülse 32 ventilseitig in Anlage. Die Medien sind nach wie vor doppeldichtend voneinander getrennt, und der Leckageraum 46 ist geschlossen.

Aufgrund der schräg axial gegen die Innenseite der Schließhülse 32 schließenden Dichtung 42 ist keine zusätzliche Dichtkante im Bereich der Dichtungsanlage notwendig. Die Vermeidung einer solchen Dichtungskante, die das Ablaufen der Leckageflüssigkeit behindern könnte, wird durch die an die Innenkontur der Schließhülse 32 angepasste Außenkontur des Ventiltellers 30 im Bereich der Dichtung 42 um die in diesem Bereich angeordnete Dichtung erreicht.

Bei weiterem Zurückziehen des Ventiltellers 30 von dem Anschluss 18a weg nimmt nun der Ventilteller 30 die Schließhülse 32 mit, bis die Offenstellung erreicht ist, wie sie in dem oberen Teilbild in Fig. 2 dargestellt ist.

Der Schließvorgang erfolgt entsprechend in umgekehrter Weise.

Neben den Betriebsarten "Schließen" und "Öffnen" kann das Ventil 20a in der Betriebsart "Takten" betrieben werden.

Zum Takten des Ventils 20a ist der Ventilteller 30 in Richtung zum Hohlkörper 12 hin und die Schließhülse 32 in Richtung zum Steuerantrieb 58 hin vom jeweiligen Dichtungssitz weg bewegbar.

Beim Antakten des Ventiltellers 30 wird Reinigungsflüssigkeit über einen metallischen Ringspalt, der zwischen dem zylindrischen Ventilsitz 36 und dem Ventilteller 30 beim Antakten gebildet wird, über den Leckageraum 46 entlang der Abschnitte 52, 54 zur Leckageaustrittsöffnung 48 und aus dieser heraus abgeführt. Dabei wird der gesamte Leckageraum 46 gereinigt. Zur vollständigen Abführung der Reinigungsflüssigkeit ist keine zusätzliche Vorrichtung wie ein zusätzliches Leckageraumventil notwendig.

Beim Antakten der Schließhülse 32 erfolgt die Reinigung des Leckageraums 46 ähnlich.

Das Lager 56 ist an seinem Umfang tangential abgeflacht, um so den Durchgang des Leckageraums 46 bis hin zur Leckageaustrittsöffnung 48 zu gewährleisten.

## Patentansprüche

1. Rohrverzweigungsanordnung, insbesondere für ein Tanklagersystem, mit einem sich zumindest annähernd vertikal erstreckenden Hohlkörper (12), der zumindest einen seitlichen Anschluss (18a-18f) aufweist, mit zumindest einem vermischungssicheren Ventil (20a-20f), das an dem Anschluss (18a-18f) sitzt und eine absperrbare Verbindung des Hohlkörpers (12) zu zumindest einer Rohrleitung herstellt, wobei das Ventil (18a-18f) zwei Schließglieder (30, 32) aufweist, zwischen denen ein Leckageraum (46) vorhanden ist, der eine Leckageaustrittsöffnung (48) aufweist, wobei der Leckageraum (46) eine sich von einem anschlussseitigen Eintritt bis zur vom Eintritt beabstandeten austrittseitigen Leckageaustrittsöffnung (48) erstreckende Umfangswand (50, 52, 54) aufweist, **dadurch gekennzeichnet, dass** die Umfangswand (50, 52, 54) schwerkraftseitig zur Leckageaustrittsöffnung (48) hin ein Gefälle aufweist, und dass das Ventil (18a-18f) eine Längsachse (22) aufweist, die mit der Horizontalen einen Winkel (β) von ≠ 0° bildet und unterhalb der Horizontalen liegt, um das Gefälle zu erzeugen, wobei der Winkel (β) in einem Bereich zwischen etwa 1° und etwa 45° liegt.

2. Rohrverzweigungsanordnung nach Anspruch 1, **dadurch gekennzeichnet, dass** der Winkel (β) in einem Bereich zwischen etwa 10° und etwa 30° liegt.

3. Rohrverzweigungsanordnung nach Anspruch 1 oder 2, **dadurch gekennzeichnet, dass** der Leckageraum (46) zumindest einen Abschnitt (52) aufweist, der sich von der Eintrittsseite her in Richtung zur Leckageaustrittsöffnung (48) verjüngt, und dass die Umfangswand (50) des Leckageraums (46) in diesem Abschnitt (52) schwerkraftseitig ein Gefälle in einem Bereich von zumindest 0,5° aufweist.

4. Rohrverzweigungsanordnung nach Anspruch 3, **dadurch gekennzeichnet, dass** das Gefälle in diesem Abschnitt (52) in einem Bereich zwischen etwa 0,5° und etwa 10° liegt.

5. Rohrverzweigungsanordnung nach Anspruch 3, **dadurch gekennzeichnet, dass** das Gefälle in diesem Abschnitt (52) in einem Bereich zwischen etwa 1° und etwa 5° liegt.

6. Rohrverzweigungsanordnung nach Anspruch 3, **dadurch gekennzeichnet, dass** das Gefälle in diesem Abschnitt (52) in einem Bereich zwischen etwa 2° und etwa 3° liegt.

7. Rohrverzweigungsanordnung nach einem der Ansprüche 1 bis 6, **dadurch gekennzeichnet, dass** das eine der Schließglieder ein mit einem zylindrischen ersten Ventilsitz (36) an einem Ventilgehäuse (24) zusammenwirkender Ventilteller (30) ist, der eine Radialdichtung (34) aufweist, und das andere Schließglied in Form einer konischen Schließhülse (32) ausgebildet ist, die an ihrem dem Ventilteller (30) zugewandten Ende eine schräg axiale Dichtung (38) trägt, die mit einem konischen zweiten Ventilsitz (40) am Ventilgehäuse (24) zusammenwirkt.

8. Rohrverzweigungsanordnung nach Anspruch 7, **dadurch gekennzeichnet, dass** der Ventilteller (30) relativ zur Schließhülse (32) in Längsrichtung des Ventils (20a-20f) axial beweglich ist und eine zweite schräg axial wirkende Dichtung (42) aufweist, die zum eintrittsseitigen Absperren des Leckageraums (46) mit einer Innenseite der Schließhülse (32) dichtend in Anlage kommt.

9. Rohrverzweigungsanordnung nach einem der Ansprüche 1 bis 8, **dadurch gekennzeichnet, dass** der Anschluss (18a-18f) an dem Hohlkörper (12) ein Anschlussgehäuse (26) aufweist, das in Längsrichtung des Hohlkörpers (12) gesehen einen oberen, seitlich vom Hohlkörper (12) abstehenden und nach unten gerichteten Abschnitt (26a) zur schräg abfallenden Verbindung des Ventils (20a-20f) mit dem Hohlkörper (12) aufweist.

## Claims

1. A pipe branching arrangement, in particular for a tank farm system, comprising an at least approximately vertically extending hollow body (12) which has at least one lateral connector (18a-18f), further comprising at least one mixproof valve (20a-20f) which sits on the connector (18a-18f) and produces a closable connection between the hollow body (12) and at least one pipeline, the valve (18a-18f) having two closing members (30, 32), between which there is a leakage space (46) which has a leakage outlet opening (48), the leakage space (46) having a circumferential wall (50, 52, 54) which extends from an inlet on the connector side to the leakage outlet opening (48) on the outlet side which is at a distance from the inlet, **characterized in that** the circumferential wall (50, 52, 54) has a decline on the gravitational force side of the leakage space (46) in direction to the leakage outlet opening (48), and that the valve (18a-18f) has a longitudinal axis (22) which forms an angle (β) of ≠ 0° with the horizontal and is located below the horizontal in order to produce the decline, wherein the angle (β) is in a range of between approximately 1 ° and approximately 45°.

2. The pipe branching arrangement of claim 1, **characterized in that** the angle (β) is in a range of between approximately 10° and approximately 30°.

3. The pipe branching arrangement of claim 1 or 2, **characterized in that** the leakage space (46) has at least one portion (52) which tapers from the inlet side in the direction to the leakage outlet opening (48) and **in that** the circumferential wall (50) of the leakage space (46) in this portion (52) on the gravitational force side of the leakage space (46) has a decline in the region of at least 0.5°.

4. The pipe branching arrangement of claim 3, **characterized in that** the decline in this portion (52) is in a range of between approximately 0.5° and approximately 10°.

5. The pipe branching arrangement of claim 3, **characterized in that** the decline in this portion (52) is in a range of between approximately 1° and approximately 5°.

6. The pipe branching arrangement of claim 3, **characterized in that** the decline in this portion (52) is in a range of between approximately 2° and approximately 3°.

7. The pipe branching arrangement of any one of claims 1 to 6, **characterized in that** one of the closing members is a valve disk (30) cooperating with a cylindrical first valve seat (36) on a valve housing (24), which has a radial seal (34), and the other closing member is configured in the form of a conical closing sleeve (32), which at its end facing the valve disk (30) carries an obliquely axial seal (38) which cooperates with a conical second valve seat (40) on the valve housing (24).

8. The pipe branching arrangement of claim 7, **characterized in that** the valve disk (30) is axially movable relative to the closing sleeve (32) in the longitudinal direction of the valve (20a-20f), and has a second obliquely axially acting seal (42), which sealingly comes to bear against an inner face of the closing sleeve (32) for closing off the leakage space (46) on the inlet side.

9. The pipe branching arrangement of any one of claims 1 to 8, **characterized in that** the connector (18a-18f) on the hollow body (12) has a connector housing (26) which, viewed in the longitudinal direction of the hollow body (12), has an upper portion (26a) projecting laterally from the hollow body (12) and oriented downwards for an obliquely declining connection of the valve (20a-20f) to the hollow body (12).

## Revendications

1. Dispositif de ramification de tube, en particulier pour un système de réservoir de stockage, avec un corps creux (12) s'étendant au moins approximativement verticalement qui présente au moins un raccordement latéral (18a-18f), avec au moins une soupape (20a-20f) protégée contre le mélange qui loge sur le raccordement (18a-18f) et établit une liaison pouvant être verrouillée du corps creux (12) pour former au moins une conduite, la soupape (18a-18f) présentant deux organes de fermeture (30, 32), entre lesquels un espace de fuite (46) est généré, lequel présente une ouverture de sortie de fuite (48), l'espace de fuite (46) présentant une paroi périphérique (50, 52, 54) s'étendant depuis une entrée côté raccordement jusqu'à l'ouverture de sortie de fuite (48) côté sortie espacée de l'entrée, **caractérisé en ce que** la paroi périphérique (50, 52, 54) présente une pente côté force de gravité vers l'ouverture de sortie de fuite (48) et **en ce que** la soupape (18a-18f) présente un axe longitudinal (22) qui forme avec l'horizontale un angle (β) de ≠ 0° et se trouve sous l'horizontale afin de générer la pente, l'angle (β) étant compris dans une plage entre environ 1 et 45°.

2. Dispositif de ramification de tube selon la revendication 1, **caractérisé en ce que** l'angle (β) est compris dans une plage entre environ 10 et 30°.

3. Dispositif de ramification de tube selon la revendication 1 ou 2, **caractérisé en ce que** l'espace de fuite (46) présente au moins une section (52) qui se rétrécit du côté d'entrée en direction de l'ouverture de sortie de fuite (48) et **en ce que** la paroi périphérique (50) de l'espace de fuite (46) présente dans cette section (52) côté force de gravité une pente dans une plage d'au moins 0,5°.

4. Dispositif de ramification de tube selon la revendication 3, **caractérisé en ce que** la pente dans cette section (52) est comprise dans une plage entre environ 0,5 et 10°.

5. Dispositif de ramification de tube selon la revendication 3, **caractérisé en ce que** la pente dans cette section (52) est comprise dans une plage entre environ 1 et 5°.

6. Dispositif de ramification de tube selon la revendication 3, **caractérisé en ce que** la pente dans cette section (52) est comprise dans une plage entre environ 2 et 3°.

7. Dispositif de ramification de tube selon l'une quelconque des revendications 1 à 6, **caractérisé en ce que** l'un des organes de fermeture est une tête de soupape (36) coagissant avec un premier siège de soupape (36) cylindrique sur un boîtier de soupape (24), laquelle présente une garniture radiale (34) et l'autre organe de fermeture est réalisé sous la forme d'une douille de fermeture (32) conique qui porte, sur son extrémité tournée vers la tête de soupape (30), une garniture axiale inclinée (38) qui coagit avec un second siège de soupape (40) conique sur le boîtier de soupape (24).

8. Dispositif de ramification de tube selon la revendication 7, **caractérisé en ce que** la tête de soupape (30) est mobile axialement par rapport à la douille de fermeture (32) dans le sens longitudinal de la soupape (20a-20f) et présente une seconde garniture agissant axialement en oblique (42) qui vient en appui de manière étanche pour le verrouillage côté entrée de l'espace de fuite (46) avec un côté intérieur de la douille de fermeture (32).

9. Dispositif de ramification de tube selon l'une quelconque des revendications 1 à 8, **caractérisé en ce que** le raccordement (18a-18f) présente sur le corps creux (12) un boîtier de raccordement (26) qui présente, vu dans le sens longitudinal du corps creux (12), une section (26a) supérieure dirigée vers le bas et dépassant latéralement du corps creux (12) pour la liaison inclinée de la soupape (20a-20f) avec le corps creux (12).
